# EUROPEAN PATENT SPECIFICATION

(11) **EP 0 975 998 B1**
(45) Date of publication and mention of the grant of the patent: **17.04.2002**
(21) Application number: 98905385.5
(22) Date of filing: 29.01.1998
(51) Int. Cl.: G02B 6/293, G02B 6/124

(54) **POLYMERIC PHASED ARRAY**
PHASENARRAY AUS POLYMER
ANTENNE RESEAU POLYMERE A COMMANDE DE PHASE

(30) Priority: 03.03.1997 EP 97200614; 24.03.1997 US 42345 P
(43) Date of publication of application: 02.02.2000
(73) Proprietor: JDS Uniphase Inc., Nepean, Ontario K2G 5W8 (CA)
(72) Inventor: HOEKSTRA, Tsjerk, Hans, NL-6951 LZ Dieren (NL)
(74) Representative: Aalbers, Arnt Reinier
(86) International application number: EP9800544
(87) International publication number: WO9839676

(56) References cited:
- EP-A- 0 568 236
- EP-A- 0 717 295
- US-A- 5 212 758
- US-A- 5 519 796
- DIEMEER M B J ET AL: "POLYMERIC PHASED ARRAY WAVELENGTH MULTIPLEXER OPERATING AROUND 1550NM" ELECTRONICS LETTERS, vol. 32, no. 12, 6 June 1996, page 1132/1133 XP000620719 cited in the application
- BIERLEIN J D ET AL: "BALANCED PHASE MATCHING IN SEGMENTED KTIOPO4 WAVEGUIDES" APPLIED PHYSICS LETTERS, vol. 56, no. 18, 30 April 1990, pages 1725-1727, XP000209296

## Description

The invention pertains to a polymeric phased array comprising an input coupler with N inputs and an output coupler with M outputs, N and M being natural numbers greater than or equal to 1, wherein the couplers are optically connected by means of an optical array comprising a series of optical waveguides, each of which differs from a neighbour in optical path length by a predetermined fixed amount.

Phased arrays, also denoted as, e.g, "Phasars," "Array waveguide multiplexers," or "Arrayed Waveguide Gratings," manufactured of a polymeric material are known from, for instance, M.B.J. Diemeer et al., "Polymeric phased array wavelength multiplexer operating around 1550 nm," *Electronic Letters,* 6th June 1996, Vol. 32, No. 12.

This publication concerns phasars comprising curved waveguides of mutually differing physical lengths and mentions that polymeric phased arrays (i.e., phased arrays comprising a polymer core and at least one polymer (top) cladding) advantageously offer optical fibre compatibility combined with low cost and the possibility of using large substrates for the fabrication. Owing to the use of large substrates, the polymeric phased arrays can be integrated with other (polymeric) optical components, such as switches, which allows the manufacture of add/drop multiplexers capable of individual routing of the different wavelength channels.

However, an interferometric device like the polymeric phasar is very sensitive to changes in temperature and physical ageing of the polymer of which it is manufactured.

The invention has for its object to reduce or even obviate the said sensitivity. This is achieved by a polymeric phased array as described in claim 1.

It was found that, as a result of the substantially equal lengths of the waveguides, the phenomena discussed above influence the optical path lengths of all the waveguides to (substantially) the same extent. Consequently, the differences in optical path lengths of the waveguides, on which differences the operational principle of a phased array is based, remain virtually constant, and the functioning of the phased array is effectively unaffected.

It is preferred that the maximum deviation from the average (arithmetical mean) of the physical length of the waveguides is smaller than 5 percent, preferably smaller than 1 percent or even smaller than 0.5 percent, of the said average, because with such a small deviation the central wavelength is sufficiently fixed for practical use.

In a preferred embodiment of the polymeric phased array according to the present invention the waveguides run straight. Additional advantages of a phasar comprising straight and parallel waveguides are that such a phasar is compact, has a relatively low insertion loss due to the absence of bends in the waveguides, allows economic use of wafers, and allows a larger integration density. Also, the production of phasars is simplified because the phasars, which are densely packed on a single wafer, can be separated by means of a single and straight cut (as opposed to a complicated cut which manoeuvres between curved phasars).

The straight phasar according to the present invention is even more compact when the input coupler and the output coupler are combined and the waveguides are provided with a mirror or a facet or endface that functions as a mirror. This kind of waveguide can be manufactured, for instance, by simply dividing a straight phasar up into two equal parts (by means of a cut perpendicular to the waveguides of the array) and depositing a reflective coating or mounting a mirror on the obtained endfaces.

Phasars comprising combined couplers and a mirror surface are known in themselves, e.g., from H. Okayama et al., "Reflective Waveguide Array Demultiplexer in LiNnO₃," *Journal of lightwave technology,* June 1996, Vol. 14, No. 6, pp. 985-990. From this publication it can be seen that prior art "half" phasars require, besides the usual curved section, additional straight sections normal to the mirror surface in order to allow a mode confined in the waveguides to settle and avoid losses during reflection. Consequently, the half phasar of the prior art requires its own "custom made" manufacturing process, whereas the half phasars of the invention can, as mentioned above, be manufactured by dividing up an existing specimen.

It is preferred that the polymeric phased array is a so-called planar structure. Free-space couplers are considered suitable couplers because of their wavelength independence. According to the invention the couplers are, Multi Mode Interferometers, also denoted as MMI couplers.

One possible way of varying the optical path length of the waveguides whilst keeping their physical length constant consists in using different polymers having a refractive index which differs (by a predetermined fixed amount) for each of the waveguides in the array. Since this requires a large number of different (blends of) polymers and process steps, it is preferred that the waveguides comprise serial zones of different refractive indices. Thus, the optical path length of each of the waveguides is determined by the refractive indices and the lengths of the serial zones.

If a certain phasar comprises, for example, fifty waveguides of equal physical length but with the optical path length of each waveguide differing from that of its nearest neighbour(s) by a predetermined fixed amount, the waveguides may consist of, successively, a zone having a refractive index n₁, a zone having a refractive index n₂, and a zone having, again, a refractive index n₁, with n₂ > n₁. By increasing the length of the zone having a refractive index n_{2,} the optical path length is increased. Thus, the optical path length of each of the waveguides can be adjusted by varying the lengths of the different zones so as to form the required grating.

Waveguides comprising serial zones and one particular way of manufacturing them are described in more detail in T. Watanabe et al., "Novel 'serially grafted' connection between functional and passive polymer waveguides," *Appl. Phys. Lett.* 65 (10), 5 September 1995. Other ways of making waveguides with the said serial zones of course are not excluded.

In another embodiment according to the present invention at least one of the waveguides comprises a polymer which allows actively induced variation of the refractive index, for instance using the thermo-optical or electro-optical principle which is well-known to the skilled person.

By using such a polymer (either over the entire length of the waveguide or in one or more zones) the central wavelength and/or the wavelength peaks in the image plane in the output free-space coupler van be adjusted during operation by powering a heating element positioned near the waveguide. In the latter instance, it is preferred that at least some of the heating elements can be individually controlled.

It is noted that EP 717 295 discloses a MxO multiplex/demultiplex device comprising optical fibres or silica waveguides which function as a grating. Although waveguides of equal length are mentioned, it is apparent from the example illustrated by Figure 3 that equal is not to be taken literally, because evanescent coupling regions require the optical fibres to be in close contact, whereas in the grating area the optical fibres should be sufficiently far apart to avoid any interaction. To meet both these requirements, the physical lengths of the waveguides will vary considerably and are substantially unequal. At any rate, polymer waveguides are not mentioned and the underlying problems (sensitivity to both ageing and temperature variations) are not an issue in the devices according to EP 717 295, which document, consequently, has no bearing on the present invention.

## Claims

1. Polymeric phased array comprising an input coupler with N inputs and an output coupler with M outputs, N and M being natural numbers greater than or equal to 1, wherein the couplers are optically connected by means of an optical array comprising a series of optical waveguides, each of which differs from a neighbour in optical path length, **characterised in that** the physical length of all the waveguides in the array is substantially equal and that the couplers are MMI couplers.

2. Polymeric phased array according to claim 1, **characterised in that** the maximum deviation from the average physical length of the waveguides is smaller than 5 percent of the said average.

3. Polymeric phased array according to claim 1 or 2, **characterised in that** the waveguides run straight.

4. Polymeric phased array according to claim 3, **characterised in that** the input coupler and the output coupler are combined and at least one of the waveguides is provided with a mirror or a facet or endface that functions as a mirror.

5. Polymeric phased array according to any one of the preceding claims, **characterised in that** at least one of the waveguides comprises at least two serial zones of different refractive indices.

6. Polymeric phased array according to anyone of the preceding claims, **characterised in that** at least one of waveguides comprises a polymer which allows actively induced variation of the refractive index.

## Patentansprüche

1. Phasenarray aus Polymer, umfassend einen Eingangskoppler mit N Eingängen und einem Ausgangskoppler mit M Ausgängen, wobei N und M natürliche Zahlen größer als oder gleich 1 sind und die Koppler optisch mittels einem optischen Array verbunden sind, der eine Serie optischer Wellenleiter umfasst, von denen sich jeder von einem Nachbar hinsichtlich einer optischen Pfadlänge unterscheidet, **dadurch gekennzeichnet, dass** die physikalische Länge aller Wellenleiter in der Anordnung im wesentlichen gleich ist, und dass die Koppler MMI-Koppler sind.

2. Phasenarray aus Polymer nach Anspruch 1, **dadurch gekennzeichnet, dass** die Maximalabweichung von der durchschnittlichen physikalischen Länge der Wellenleiter kleiner als 5% des Durchschnitts ist.

3. Phasenarray aus Polymer nach Anspruch 1 oder 2, **dadurch gekennzeichnet, dass** die Wellenleiter gerade verlaufen.

4. Phasenarray aus Polymer nach Anspruch 3, **dadurch gekennzeichnet, dass** die Eingangskoppler und die Ausgangskoppler kombiniert sind und mindestens einer der Wellenleiter mit einem Spiegel ausgerüstet ist, oder mit einer Facette oder einer Endoberfläche, die als ein Spiegel dient.

5. Phasenarray aus Polymer nach einem der vorhergehenden Ansprüche, **dadurch gekennzeichnet, dass** mindestens einer der Wellenleiter mindestens zwei serielle Zonen mit unterschiedlichen Brechungsindizes umfasst.

6. Phasenarray aus Polymer nach einem der vorhergehenden Ansprüche, **dadurch gekennzeichnet, dass** einer der Wellenleiter ein Polymer umfasst, das eine aktiv induzierte Veränderung des Brechungsindex erlaubt.

## Revendications

1. Antenne réseau polymère à commande de phase comprenant un coupleur d'entrée avec N entrées et un coupleur de sortie avec M sorties, N et M étant des nombres naturels supérieurs ou égaux à 1, dans laquelle les coupleurs sont optiquement reliés au moyen d'un réseau optique comprenant une série de guides d'onde optiques, dont chacun diffère d'un voisin en longueur de chemin optique, **caractérisée en ce que** la longueur physique de tous les guides d'onde dans le réseau est essentiellement égale et **en ce que** les coupleurs sont des coupleurs MMI.

2. Antenne réseau polymère à commande de phase selon la revendication 1, **caractérisée en ce que** l'écart maximal de la longueur physique moyenne des guides d'onde est inférieur à 5 pour cent de ladite moyenne.

3. Antenne réseau polymère à commande de phase selon la revendication 1 ou 2, **caractérisée en ce que** les guides d'onde sont droits.

4. Antenne réseau polymère à commande de phase selon la revendication 3, **caractérisée en ce que** le coupleur d'entrée et le coupleur de sortie sont combinés et au moins un des guides d'onde est pourvu d'un miroir ou d'une facette ou surface terminale qui agit comme un miroir.

5. Antenne réseau polymère à commande de phase selon l'une quelconque des revendications précédentes, **caractérisée en ce qu'**au moins un des guides d'onde comprend au moins deux zones en série d'indices de réfraction différents.

6. Antenne réseau polymère à commande de phase selon l'une quelconque des revendications précédentes, **caractérisée en ce qu'**au moins un des guides d'onde comprend un polymère qui permet un changement de l'indice de réfraction activement induit.
